# EUROPEAN PATENT SPECIFICATION

(11) **EP 4 032 955 B1**
(45) Date of publication and mention of the grant of the patent: **02.07.2025**
(21) Application number: 22152999.3
(22) Date of filing: 24.01.2022
(51) Int. Cl.: C08L 67/06, C08J 5/04, C08K 3/04, C08K 7/02, C08K 11/00

(54) **FIBRE-REINFORCED COMPOSITE MATERIAL**
FASERVERSTÄRKTES VERBUNDMATERIAL
MATÉRIAU COMPOSITE RENFORCÉ PAR FIBRES

(30) Priority: 22.01.2021 NL 2027367
(43) Date of publication of application: 27.07.2022
(73) Proprietor: Green Composites B.V., 1043 AM Amsterdam (NL)
(72) Inventor: BÖTTGER, Willem Otto Julius, 1043 AM AMSTERDAM (NL); ZARAFSHANI, Zoya, 1043 AM AMSTERDAM (NL); BABU, Aditya, 1043 AM AMSTERDAM (NL)
(74) Representative: Algemeen Octrooi- en Merkenbureau B.V.

(56) References cited:
- WO-A1-2017/202702
- US-A1- 2015 099 827
- NONGNUCH SUTIVISEDSAK ET AL: "Use of Nutshells as Fillers in Polymer Composites", JOURNAL OF POLYMERS AND THE ENVIRONMENT ; FORMERLY: 'JOURNAL OF ENVIRONMENTAL POLYMER DEGRADATION', KLUWER ACADEMIC PUBLISHERS-PLENUM PUBLISHERS, NE, vol. 20, no. 2, 7 March 2012 (2012-03-07), pages 305 - 314, XP035056092, ISSN: 1572-8900, DOI: 10.1007/S10924-012-0420-Y
- DAHAL RAJ KUMAR ET AL: "Biochar as a filler in glassfiber reinforced composites: Experimental study of thermal and mechanical properties", COMPOSITES: PART B, ELSEVIER, AMSTERDAM , NL, vol. 175, 6 July 2019 (2019-07-06), XP085821494, ISSN: 1359-8368, [retrieved on 20190706], DOI: 10.1016/J.COMPOSITESB.2019.107169

## Description

The present invention relates to process for manufacturing a radically curable mixture and to a compression moulding process for the preparation of fibre-reinforced articles.

Bulk molding compound (BMC) and sheet moulding compound (SMC) are a mixture of chopped glass fibers, resin and fillers. Even though other fibers such as sisal, cotton, asbestos, carbon, aramid, chopped nylon rag and wood are used, the most common reinforcing fiber in BMC and SMC is E-glass fiber. As BMC is usually mixed in a dough-like form rather than as a sheet, it is also called dough molding compound (DMC), and is sold in a log or rope form. However, instead of the sheet form, BMC is made in the form of a thick rope, typically 25-50 mm in diameter. The resin formulation of BMC materials is similar to that of SMC materials.

To make BMC, the major ingredients, namely resin, mineral filler, initiator, etc., are blended together with chopped glass fiber strands in a ribbon blender. The mixed blend is fed into an extruder to produce a continuous rope of BMC that can be cut into smaller lengths for storage and handling. The extruded BMC rope is allowed to mature much like the SMC sheet. After maturation, the rope attains the consistency and pliability of a flour dough, a reason why this material is sometimes called dough molding compound (DMC). The final product from BMC is produced by compression molding, transfer molding, or injection molding.

Polymer-based materials can be reinforced with fibres in order to add rigidity and impede crack propagation. Thin fibres can have very high strength and, provided they are mechanically well attached to the matrix, they can greatly improve the composite's overall properties. There are two main categories of fibre-reinforced composite materials: short fibre-reinforced materials and continuous fibre-reinforced materials. Continuous fibre-reinforced materials often constitute a layered or laminated structure. The woven and continuous fibre styles are typically available in a variety of forms, being impregnated with the resin. The short fibres are typically employed in compression moulding and sheet moulding operations. They have the form of flakes, chips, or random mate. Common fibres used for reinforcement include glass fibres, carbon fibres, cellulose fibres (wood fibre, paper fibre, straw), high-strength polymers such as aramid, and natural fibres.

Recent attention is being devoted to reducing the weight of SMC composites. Calcium carbonate, the common inorganic filler, contributes to the total material's specific gravity of 1.9; substitution by glass beads reduces this by 1/3 with only minor property loss, and nanocomposite fillers and carbon fibers have even greater potential.

It is also known to use grasses, i.e. plants of the Gramineae family, to reinforce composites. WO2017202702 in the name of the present applicant relates to a radically curable mixture comprising a radically curable thermosetting resin, fibres from plants of the Gramineae family, one or more organic peroxides, and optionally fillers, wherein the content of fibres from plants of the Gramineae family in the mixture is in the range 5-80 wt.% and wherein the total moisture content of the fibres from plants of the Gramineae family is 0.5-25 wt.%, based on the total weight of said fibres, said plants being used without any pretreatment to isolate the fibres.

EP 3 593 990 relates to a composite material member comprising: an FRP layer made of fiber-reinforced plastic, a resin-rich layer that has a lower fiber content than the FRP layer and that is formed in at least a partial region of a surface of the FRP layer; wherein the reinforcing fibers are for example carbon fiber, glass fiber, polyamide fiber, alumina fiber, silicon carbide fiber, boron fiber, and carborundum fiber. The matrix resin is chosen from thermosetting resins and thermoplastic resins, such as epoxy resin, phenol resin, unsaturated polyester resin, vinyl ester resin, polyimide resin, polycarbonate resin, polyamide resin, and polyphenylene sulfide (PPS) resin.

WO2014118101A1 relates to a process for the preparation of a fibre-reinforced composite material comprising the step of contacting (i) a radically curable resin, (ii) fibres with a total water content of 0.5-20 wt.%, based on the total weight of fibres, (iii) at least one transition metal compound selected from manganese, iron, and copper compounds, and (iv) a peroxide.

US 2015/099827 relates to an unsaturated polyester resin composition comprising an unsaturated polyester, a crosslinking agent, an inorganic filling material, a hollow filler, and a fibrous reinforcing material, wherein the hollow filler has a content ratio of a hollow filler having a particle diameter of 30 µm or less of 80 vol % or more with respect to a total volume of the hollow filler, and wherein a content of the hollow filler in the unsaturated polyester resin composition is from 15 to 24 mass %, wherein the hollow filler comprises at least one of glass balloons, silica balloons, or alumina balloons. Examples of the inorganic filling material include calcium carbonate, aluminum hydroxide, wollastonite, clay, talc, mica, and silicon dioxide, wherein the average particle diameter of the inorganic filling material is 0.5 µm or more.

A scientific article written by Nongnuch Sutiviedsak et al; "Use of Nutshells as fillers in Polymer Composites", Journal of Polymers and the environment, part 20, pages 305-314 relates to the possibility of using nutshells, i.e. low cost biodegradable materials, as fillers in poly(lactic acid) and low density polyethylene. The nutshells were ground into powder, blended with the polymer, and then injection molded with final weight varying from 10 to 40 weight %. The mechanical and thermal properties of the composites were then studied. According to this article lignocellulosic fillers are mixed only with thermoplastic polymers and not in combination with natural fibers, thus resulting in a system of a 2-component mixture.

A scientific article written by Dahal Raj Kumar et al.; "Biochar as a filler in glass fiber reinforced composites; Experimental Study of thermal and mechanical properties, Composites, part B, Elsevier, part 175, 6 July 2019, page 1 relates to the use of biochar from spruce wood pellets and activated charcoal as filler in glass fibers reinforced composites. Spruce wood pellets were used as feedstock for pyrolysis to produce biochar. Biochar as a filler in composites alters the mechanical and fire retarding properties of the material. Biochar as filler is used in low weight percentages, e.g. 10 wt.% and 15 wt.%.

An object of the present invention is to provide a process for manufacturing a radically curable mixture by mixing and/or kneading a mixture comprising radically curable thermosetting resin, fibres, curing agent and filler wherein use is made of sustainable fillers.

Another object of the present invention is to provide a compression moulding process for the preparation of fibre-reinforced articles, wherein the final composites thus manufactured possess high mechanical, physical, thermal, and chemical resistance properties.

The present invention thus relates to a process for manufacturing a radically curable mixture by mixing and/or kneading a mixture comprising radically curable thermosetting resin, fibres, curing agent and filler to form a dough, wherein the content of radically curable thermosetting resin in the mixture is in the range 5-80 wt.%, the content of fibres in the mixture is in the range 9-50 wt.%, the content of filler in the mixture is in the range 10 - 80 wt.%, wherein the filler is chosen from one or more of the group of a) char originated from pyrolysis of grasses, wood, agricultural crops, manure, landfill and plastic waste sources and b) grinded pits from stone fruits, grinded pits from drupes and grinded shells from nuts, all wt.% are based on the total weight of the mixture, wherein the total sum of the components in the mixture is 100 %. The content of curing agent in the mixture is stoichiometric to the content of radically curable thermosetting resin in the mixture. An example of the content of curing agent in the mixture is the range 0.4 - 0.7 wt.%, based on the total weight of the mixture.

The present inventors found that by such a process one or more objects have been achieved. The present invention thus relates to the use of alternative sustainable fillers based on a) char or b) grinded fruit pits/ seeds or shells, or a combination of one or more members of a) and b) for application in BMC and SMC composite production processes. Thus, the radically curable mixture according to the present invention may include one or more fillers of group a), one or more fillers of group b), or a combination thereof.

A specific group of sustainable fillers according to the present invention are fillers originated from pyrolysis of carbonaceous material. Examples of carbonaceous material include but are not limited to grasses, agricultural crops, manure, landfill waste, plastics or plants or animals waste-streams. In fact, that group of sustainable fillers includes any organic material which has high carbon content in its structure and produces char after being pyrolysed. A sub-category of sustainable fillers according to the present invention is a char which is produced by pyrolysis of biomass, a so-called biochar. Another specific group of sustainable fillers according to the present invention are pits from stone fruits, pits from drupes and shells from nuts. The sustainable fillers according to the present invention can be used for application in BMC and SMC composite production processes.

The present inventors found that conventional fillers such as calcium carbonate are heavy and thus the composites made by them are heavy as well. Additionally, the fillers as used in the process for manufacturing a radically curable mixture add some extra beneficial properties to the final composites such as flame resistance, hydrophobicity (less water adsorption for outdoor applications), specific strength, stiffness, and impact resistance, or a combination thereof.

The present inventors found that if the content of radically curable thermosetting resin in the mixture is below the afore mentioned lower limit the resulting dough will be too dry resulting in serious problems with mixing and viscosity and loading of dry material (fiber and fillers). The present inventors found that if the content of radically curable thermosetting resin in the mixture is above the afore mentioned upper limit it is hard to manufacture high quality composite plates, i.e. the occurrence of brittle and broken composite plates after pressing. The content of radically curable thermosetting resin in the mixture is in the range above 5 wt.%, preferably above 20 wt.% and below 80 wt.%, preferably below 60 wt.% and more preferably below 50 wt.%.

The present inventors found that if the content of fibres in the mixture is below the afore mentioned lower limit a transfer of stress to fibers will not happen fully and the composite plates after pressing do not meet the minimum mechanical properties. The present inventors found that if the content of fibres in the mixture is above the afore mentioned upper limit that high amount of fiber cannot be loaded to dough resulting in a very dry dough and homogenous mixing won't happen. The content of fibers in the mixture is in the range above 9 wt.% and below 50 wt.%, preferably below 40 wt.% and more preferably below 35 wt.%. In general, for SMC the upper range of the content of fibres is higher than the upper range of the content of fibres for BMC.

The present inventors found that if the content of curing agent in the mixture is below the stoichiometric ratio with regard to the content of radically curable thermosetting resin in the mixture there will be not enough curing or even no curing at all. The present inventors found that if the content of curing agent in the mixture is above that stoichiometric ratio there will be too much curing resulting in deteriorated final mechanical properties of the composite.

The present inventors found that if the content of filler in the mixture is below the afore mentioned lower limit the dough consistency is not suitable for pressing. The present inventors found that if the content of filler in the mixture is above the afore mentioned upper limit the dough will be to dry/viscous and fibers cannot be added. The content of fillers in the mixture is in the range above 10 wt.%, preferably above 30 wt.% and below 80 wt.%, preferably below 70 wt.% and more preferably below 60 wt.%.

A role of filler in the present component system is to decrease density by using light and waste based materials. Another role of filler in the present component system is as a transport carrier for high volumes of fibers. The present inventors successfully found out optimal volume ratios of these fillers so that they can be loaded with high volumes of fibers and transport them homogenously through the mold while the dough is being compressed. In an example the fiber volume is high to result in good mechanical properties, and at the same time low to keep the good flow and wetting capability by resin. The role of fillers are here as the transporter of fibers. The volume of filler provides the required viscosity of the dough which is crucial to have an optimal flow and wetting of the fibers while the components are being mixed and pressed. A goal is to keep the ratio of resin as low as possible and dry content of the dough (fillers and fibers) as high as possible and at the same time control the rheology and flow of the dough so that complicated geometries of composites could be produced.

Drupe or stone fruit is an indehiscent fruit in which an outer fleshy part (exocarp, or skin, and mesocarp, or flesh) surrounds a single shell (the pit, stone, or pyrene) of hardened endocarp with a seed (kernel) inside. Examples of stone fruits are peaches, nectarines, plums, lychees, mangoes, almonds, apricots, dates and cherries. Typical drupes include olives, loquat, plums, cherries, mangoes, pecans, and amlas (Indian gooseberries). Examples of nut shells are pistachio and almond shells.

Char or biochar, charcoal, or activated carbon are all made using a process called pyrolysis (sometimes combined with an extra gasification process), in which a source material, i.e. a carbon-containing substance, is subjected to elevated temperatures in the absence of oxygen so that it thermally decomposes into char, or carbon-rich solids. The lack of oxygen is key to the process, as introducing too much would oxidize the carbon and cause it to burn away as gaseous products. In pyrolysis, the starting material or "feedstock" and processing conditions can be tuned to tailor a carbon-based product for a specific application. Feedstock can be from agricultural sources like wood, road side grass, agricultural waste, but also of plastic waste.

The present inventors found that the hydrophobic nature of biochar, especially biochar produced at higher pyrolysis or gasification temperatures, makes it very compatible with the hydrophobic unsaturated polyester resin when using biochar as filler in BMC. This compatibility with resin along with high surface area of biochar makes it easier to spread homogenously all over the dough and therefore transfer the load to fibers. This compatibility with resin, also makes it easier to use high concentrations of biochar in BMC dough (up to 50% to 60% wt. of the total dough). The hydrophobic nature of biochar also decreases moisture absorption which is important when natural fibers are used. This gives biochar a unique characteristic which is beyond using it just as a conventional "filler".

It should be taken into account that the percentages of the individual components of the mixture mentioned above change interactively with each other, for example if the amount of filler increases from 40 wt. % to 50 wt.% or 60 wt.%, the amount of radically curable thermosetting resin, fibers and curing agent changes so that the sum of all components will be 100%. The ratios are dependent on the physical and chemical properties and interactions of the components of the composites. In that context the ratio of curing agent is preferably stoichiometric to the thermosetting resin, so if resin ratio changes, curing agent ratio changes automatically, otherwise chemical reactions and crosslinking density required for the composite are not reached. The ratio radically curable thermosetting resin: curing agent may be dependent on the type of thermosetting resin. The sum of the individual components in the mixture or dough will always be 100%.

Examples of BMC recipes according to the present invention include but are not limited: 25 wt.% radically curable thermosetting resin, 10 wt.% fibres, 0.4 wt.%. curing agent and 64.6 wt.% filler, or 30 wt.% radically curable thermosetting resin, 12 wt.% fibres, 0.5 wt.%. curing agent and 57.5 wt.% filler, or 33 wt.% radically curable thermosetting resin, 15 wt.% fibres, 0.5 wt.%. curing agent and 51.5 wt.% filler (in this recipe using less filler usually results in adding more fiber, this extra fiber ratio is adapted according to type of the fiber), or 40 wt.% radically curable thermosetting resin, 12 wt.% fibres, 0.6 wt.% curing agent and 47.5 wt.% filler (when more char is in the recipe, the resin ratio should increase). Please note that the sum of the individual components in these examples of recipes is 100%.

In an embodiment of the present process the mixture possesses the form of a dough and is suitable for use as Bulk Moulding Compound (BMC), Sheet Moulding Compound (SMC) or Continuous Impregnated Compound (CIC). Compression moulding is a method of moulding in which the moulding materials placed in a mould and subsequently compressed by closing the mould and applying pressure to it. Heat and pressure are maintained until the moulding material has cured.

The moulding material is generally prepared by either sheet moulding (resulting in a Sheet Moulding Compound [SMC]) or bulk moulding (resulting in a Bulk Moulding Compound [BMC]) or can be molded in injection, in injection-compression, and in compression [CIC].

Manufacturing of SMC is a continuous in-line process. All components, except the fibres, are mixed and continuously metered onto to the surface of a carrier film. Two mirror imaged metering stations operate simultaneously, resulting in two coated carrier films. One of the coated carrier films is layered with chopped fibers. The two coated carrier films are then brought together in the compaction section, where the sandwich-like layered components are compacted into one homogenous compound sheet. The sheet is then stored in a controlled environment where it is matured.

BMC is manufactured by mixing all ingredients, including the fibres, for instance in a continuous screw mixer, a sigma blade mixer and a plough blade mixer. The resulting dough is then matured in a controlled environment until use in compression moulding.

CIC is manufactured by mixing all ingredients, including the fibres, for instance in a continuous screw mixer, a sigma blade mixer and a plough blade mixer. The resulting dough is then matured in a controlled environment until use in injection, in injection-compression, and in compression moulding.

In an embodiment of the present process the resin is chosen from the group of unsaturated polyester resin, an epoxy resin, a furan-based and a lignin-based resin, or a combination thereof.

In an embodiment of the present process the fibres are selected from the group of natural fibers, recycled cellulose fibers, but also glass fibers, carbon fibers and aramid fibers, or a combination thereof.

In an embodiment of the present process the mixture further comprises an additional filler chosen from the group of calcium carbonate and waste-stream based filler, wherein the sum of the content of filler and the additional filler in the mixture is in the range 40 - 70 wt.%. Examples of the additional fillers are calcium carbonate and calcium carbonate-containing sources, such as calcite. The fillers are preferably obtained from waste streams from other processes, such as water softening processes or shells. Preferred are fillers obtained from waste streams.

In an embodiment of the present process the char is produced by pyrolysis, or combination of pyrolysis and gasification process, of biomass chosen from the group of agricultural, forestry, animal manure, industrial residues, plastic waste, urban waste and sewage sludge, or a combination thereof. Char is a high-carbon, fine-grained residue that is produced through pyrolysis processes, i.e. the direct thermal decomposition of biomass or plastic waste, or a combination thereof in the absence of oxygen.

In an embodiment of the present process the curing agent is selected from the group consisting of peroxyesters and peroxycarbonates, preferably the curing agent is tert-butyl peroxybenzoate.

The present invention also relates to a compression moulding process for the preparation of fibre-reinforced articles comprising the step of filling a mould with the radically curable mixture obtained as discussed above and applying a temperature in the range 60-180°C and a pressure of at least 10 bar to the moulded mixture.

The present invention also relates to articles obtained by such a compression moulding process, said article comprising a radically cured thermosetting resin, fibres, curing agent and filler, wherein the content of radically curable thermosetting resin in the article is in the range 5-80 wt.%, the content of fibres in the article is in the range 9-50 wt.%, the content of filler in the article is in the range 10 - 80 wt.%, wherein the filler is chosen from one or more of the group of char originated from pyrolysis of grasses, agricultural crops, manure, landfill and plastic waste sources, grinded pits from stone fruits, grinded pits from drupes and grinded shells from nuts, all wt.% are based on the total weight of the article, wherein the total sum of the components in the article is 100 %. The content of curing agent in the article is stoichiometric to the content of radically curable thermosetting resin in the article. An example of the content of curing agent in the article is the range 0.4 - 0.7 wt.%, based on the total weight of the article.

The present invention also relates to automotive part made of fibre-reinforced articles as discussed above. Examples of automotive parts include body components, including trim, bumper, fender, spoiler, trunk, quarter panel, fuel tank etc.

The present invention also relates to constructive parts made of fibre-reinforced articles as discussed above.

The present invention also relates to a part made of fibre-reinforced articles as discussed above for housing of electronics.

As mentioned above, there is a desire to use alternative sustainable fillers based on char or grinded fruit pits/ seeds or shells for application in BMC, SMC and CIC composite production processes. These fillers will replace partially or fully the conventional calcium carbonate filler. These fillers are lighter than calcium carbonate and can improve mechanical, physical, thermal, and chemical resistance properties of final composites. The novel fillers are based on waste-stream products and contribute to a circular economy.

Suitable resins to be cured according to the invention include alkyd resins, unsaturated polyester (UP) resins, vinyl ester resins, (meth)acrylate resins. Preferred resins are (meth)acrylate resins, UP resins, and vinyl ester resins. In the context of the present application, the terms "unsaturated polyester resin" and "UP resin" refer to the combination of unsaturated polyester and ethylenically unsaturated monomeric compound. The term "vinyl ester resin" refers to a resin produced by the esterification of an epoxy resin with an unsaturated monocarboxylic acid, and dissolved in an ethylenically unsaturated monomeric compound (e.g. styrene). UP resins and vinyl ester resins as defined above are common practice and commercially available.

Suitable UP resins to be cured by the process of the present invention are so-called ortho-resins, iso-resins, iso-npg resins, and dicyclopentadiene (DCPD) resins. Examples of such resins are maleic, fumaric, allylic, vinylic, and epoxy type resins, bisphenol A resins, terephthalic resins, and hybrid resins. Acrylate and methacrylate resins without an additional ethylenically unsaturated monomeric compound like styrene are referred to in this application as (meth)acrylate resins.

The radically curable resin may be combined with other types of resins, such as epoxy resins. A preferred resin combination that can be used in the process of the present invention is a combination of a UP resin and an epoxy resin. Examples of suitable ethylenically unsaturated monomers to be present in UP and vinyl ester resins include styrene and styrene derivatives like a-methyl styrene, vinyl toluene, indene, divinyl benzene, vinyl pyrrolidone, vinyl siloxane, vinyl caprolactam, stilbene, but also diallyl phthalate, dibenzylidene acetone, allyl benzene, methyl methacrylate, methyl acrylate, (meth)acrylic acid, diacrylates, dimethacrylates, acrylamides, vinyl acetate, triallyl cyanurate, triallyl isocyanurate, allyl compounds which are used for optical application (such as (di)ethylene glycol diallyl carbonate), chlorostyrene, tert-butyl styrene, tertbutyl acrylate, butanediol dimethacrylate, bismaleimides, biscitraconimides, bisitaconimides, monoitaconimides, monocitraconimides, monocitraconimides containing a functional group (e.g. an additional unsaturated functionality, for example n-allylcitraconimides), and mixtures thereof. Suitable examples of (meth)acrylate reactive diluents are PEG200 di(meth)acrylate, 1,4-butanediol di(meth)acrylate, 1,3-butanediol di(meth)acrylate, 2,3-butanediol di(meth)acrylate, 1,6-hexanediol di(meth)acrylate and its isomers, diethylene glycol di(meth)acrylate, triethylene glycol di(meth)acrylate, glycerol di(meth)acrylate, trimethylol propane di(meth)acrylate, neopentyl glycol di(meth)acrylate, dipropylene glycol di(meth)acrylate, tripropylene glycol di(meth)acrylate, PPG250 di(meth)acrylate, tricyclodecane dimethylol di(meth)acrylate, 1,10-decanediol di(meth)acrylate, tetraethylene glycol di(meth)acrylate, trimethylol propane tri(meth)acrylate, glycidyl (meth)acrylate, and mixtures thereof.

The amount of ethylenically unsaturated monomer to be used is preferably at least 0.1 wt.%, based on the weight of the resin, more preferably at least 1 wt.%, and most preferably at least 5 wt.%. The amount of ethylenically unsaturated monomer is preferably not more than 50 wt.%, more preferably not more than 40 wt.%, and most preferably not more than 35 wt.%.

An example of cross-linking initiators or hardeners are peroxides including inorganic peroxides and organic peroxides, such as conventionally used ketone peroxides, peroxyesters, diaryl peroxides, dialkyl peroxides, and peroxydicarbonates, but also peroxycarbonates, peroxyketals, hydroperoxides, diacyl peroxides, and hydrogen peroxide. Preferred peroxides are peroxyesters and peroxycarbonates.

The organic peroxide preferably has a 10 hour half-life, as measured with DSC-TAM in a 0.1 M monochlorobenzene solution, of at least 50 °C, more preferably at least 60 °C. This minimum half-life ensures sufficient pot life of the radically curable composition, so that the radically curable mixture can still be used for compression moulding after maturing at 20 °C for one week.

Particularly preferred peroxides are tert-amyl peroxy pivalate, tert-butyl peroxypivalate, 1,1,3,3-tertamethylbutyl peroxy-2-ethylhexanoate, tert-amyl peroxy-2-ethylhexanoate, tert-butyl peroxy-2-ethylhexanoate, tert-butyl peroxydiethylacetate, tert-butyl peroxyisobutyrate, tert-amylperoxy 2-ethylhexyl carbonate, tert-amyl peroxyacetate, tert-butyl peroxy-3,5,5-trimethylhexanoate, tert-butylperoxy isopropyl carbonate, tert-butylperoxy 2-ethylhexyl carbonate, tert-amyl peroxybenzoate, tert-butyl peroxyacetate, butyl 4,4-di(tertbutylperoxy) valerate, tert-butyl peroxybenzoate. The most preferred peroxide is tert-butyl peroxybenzoate. The peroxides can be added as such, or in combination with a phlegmatizer.

Examples of phlegmatizers are hydrophilic esters and hydrocarbon solvents. The amount of peroxide to be used for curing the resin is preferably at least 0.1 weight parts per hundred resin (phr), more preferably at least 0.5 phr, and most preferably at least 1 phr. The amount of peroxide is preferably not more than 8 phr, more preferably not more than 5 phr, most preferably not more than 2 phr. In addition to the above-mentioned ingredients, usual additives for compression moulding can be added, such as pigments, mould release agents (e.g. zinc stearate), tougheners, viscosity modifiers and emulsifiers.

The radically curable mixture according to the present invention can be prepared by mixing or kneading all ingredients to form a dough, followed by maturing the dough at a temperature of at most 25 °C.

Examples of suitable kneading and/or mixing equipment are continuous crew mixers, sigma blade mixers, and plough blade mixers.

In a preferred embodiment, resin, peroxide, and the optional mould release agent are first mixed or kneaded, after which the filler(s) and the optional emulsifier and pigments are added, which is then followed by addition of the fibres. The resulting mixture is mixing or kneaded in suitable mixing or kneading equipment to form a dough.

Maturing of the dough is preferably done in an environment that is shielded from light. The dough is preferably packaged such that volatiles (e.g. styrene) will not evaporate from the mixture. Maturing temperature is preferably room temperature, more preferably around 20°C. The maturing preferably takes at least three days, preferably up to 7 days.

Optionally, a transition metal compound is present in the mixture in order to accelerate the cure. Examples of suitable transition metal compounds are salts and complexes of iron, copper, or manganese, and combinations of such compounds. Copper and iron are the most preferred transition metals. Even more preferred are copper and a combination of copper and iron.

Although the addition of a transition metal compounds is not required in the present invention, if it is present, it is added in a total amount of 0.5-75 mmol/kg resin, more preferably 2-50 mmol/kg, even more preferably 2-25 mmol/kg, and most preferably 2-10 mol/kg resin.

Suitable manganese, copper, and iron compounds are their halides, nitrates, sulphates, sulphonates, phosphates, phosphonates, oxides, carboxylates, and complexes of these metals with a ligand. Examples of suitable carboxylates are lactate, 2-ethyl hexanoate, acetate, propionate, butyrate, oxalate, laurate, oleate, linoleate, palmitate, stearate, acetyl acetonate, octanoate, nonanoate, heptanoate, neodecanoate, or naphthenate. Examples of ligands are pyridine and the tridentate, tetradentate, pentadentate, and hexadentate nitrogen donor ligands disclosed in WO 2011/183309.

Preferred manganese compounds are manganese chloride, nitrate, sulphate, lactate, 2-ethyl hexanoate, octanoate, nonanoate, heptanoate, neodecanoate, naphthenate, and acetate, and the Mn complexes of pyridine, porphirine-based ligands, and of the tridentate, tetradentate, pentadentate, or hexadentate nitrogen donor ligands disclosed in WO 2011/83309. Any one of Mn(II), Mn(III), Mn(IV), and Mn(VII) compounds can be used.

Preferred copper compounds are copper chloride, nitrate, sulphate, lactate, 2-ethyl hexanoate, octanoate, nonanoate, heptanoate, neodecanoate, naphthenate, and acetate. Both Cu(I) and Cu(ll) compounds can be used.

Preferred iron compounds are iron chloride, nitrate, sulphate, lactate, 2-ethyl hexanoate, octanoate, nonanoate, heptanoate, neodecanoate, naphthenate, acetate, and iron complexes of pyridine, porphirine-based ligands, or the tridentate, tetradentate, pentadentate, or hexadentate nitrogen donor ligands of WO 2011/83309. Both Fe(II) and Fe(III) can be used. More preferably, it is an iron(II) or iron(III) complex of a tridentate or pentadentate nitrogen donor ligand according to WO 2011/83309.

Preferred nitrogen donor ligands according to WO 2011/83309, for both Mn and Fe, are the bispidon ligands and the TACN-Nx ligands. The preferred bispidon ligand is dimethyl-2,4-di-(2-pyridyl)-3-methyl-7-(pyridin-2-ylmethyl)-3,7-diazabicyclo[3.3.1] nonan-9-one-l,5-dicarboxylate (N2py3o-Cl). The preferred TACNNx ligand is 1,4,7-trimethyl-1,4,7-triazacyclononane (Me₃-TACN).

In order to make articles by compression moulding the radically curable mixture, a mould is filled with the mixture. The mixture in the mould is subjected to a temperature in the range 60-180 °C, preferably 80-170 °C, even more preferably 100-160 °C, and most preferably 130-160 °C, and a pressure above 10 bar, preferably 10-120 bar, more preferably 40-100 bar, even more preferably 50-90 bar, and most preferably 60-80 bar.

The cured compositions find use in various applications, including marine applications, roof shingles, construction, relining, pipes and tanks, flooring, windmill blades, laminates, automotive parts, furniture, timbering, and street furniture (e.g. facade elements, lamppost armatures). If desired, the resulting article can be coated. A preferred way of coating is powder coating, because no volatiles are released during that process.

### Examples

All examples were prepared by mixing an amount of resin and curing agent for about 2 minutes at room temperature in a Z-blade mixer. An amount of additional components, e.g. release agent, plasticizer etc, and fillers were added and mixed for another 15 minutes. Finally, the fibres were added in three batches and after addition of each batch of fiber the resulting mixture was mixed for another two minutes. In the examples different types of recipes were tested.

The resulting BMC was matured at 20°C at room temperature and then pressed into a mold to form a plate with a size of 250x120 mm using Reaktometer (ex- SMC Technologie, Derk & Kuper OHG) with a pressure of 5.3 MPa, a temperature of 145°C, and a period of 180 seconds.

Flexural Modulus and strength were determined in accordance with ISO 178:2019.

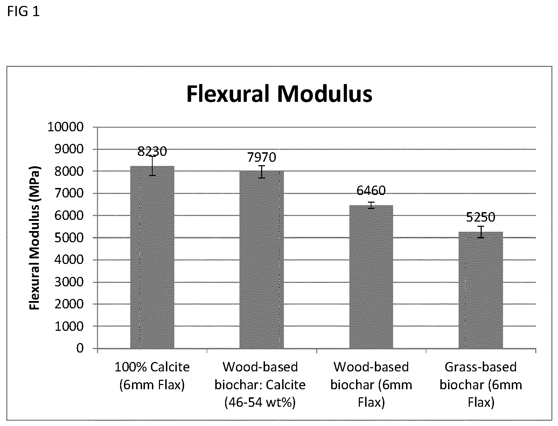

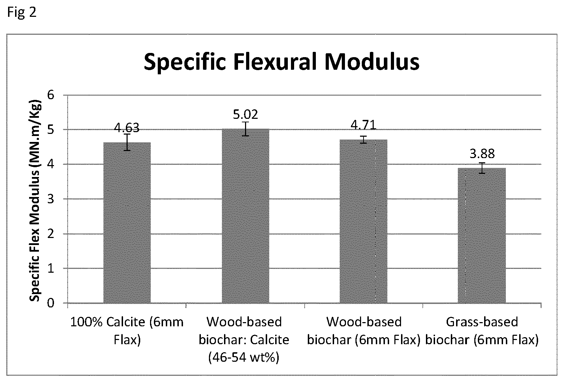

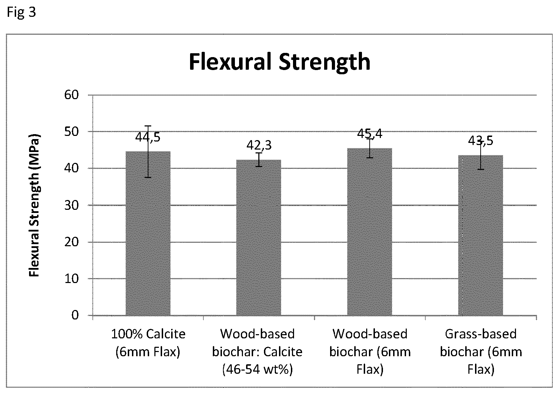

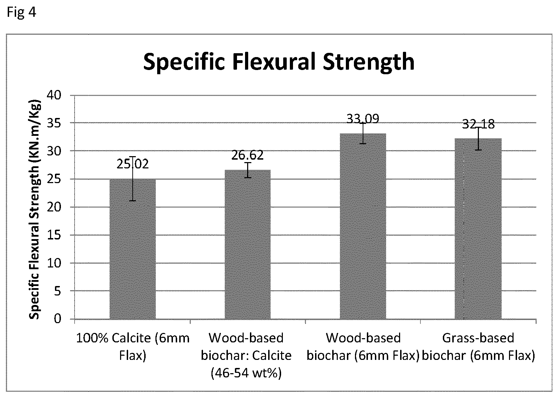

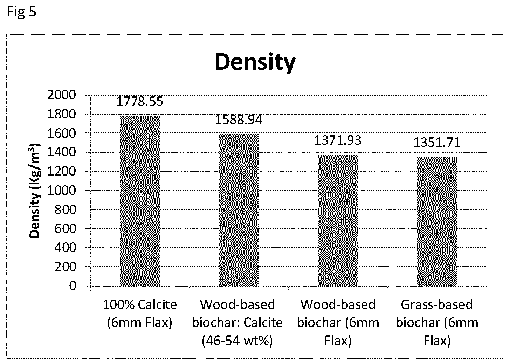

The results of Examples 1-4 are shown in Fig 1-5.
Fig 1 shows the flexural modulus (Mpa) of the different composites.
Fig 2 shows the specific flexural modulus (MN.m/kg) of the different composites.
Fig 3 shows the flexural strength (Mpa) of the different composites
Fig 4 shows the specific flexural strength (KN.m/Kg) of the different composites.
Fig 5 shows the density (Kg/m³) of the different composites.

From the one can conclude that the flexural strength and the flexural modulus of the present composites are similar to the composites made with the standard fillers. The present invention will now be illustrated by examples and comparative examples. The person skilled in the art will readily understand that, while the detailed description of the invention will be illustrated making reference to one or more embodiments, each having specific combinations of features and components, many of those features and components can be equally or similarly applied independently in other embodiments or combinations.

### Examples 1-4 and Comparative Examples 1-4

The following components were used to prepare a BMC dough. In all tables reference #1 relates to thermosetting resin, #2 to curing agent, #3 to release agent, #4 to filler, and #5 to fiber.

### Example 1

| | | **(BMC Dough 1) - 100% mineral filler (Calcite)** | | |
|---|---|---|---|---|
| **Number** | **Ingredient** | **Name** | **Amount (wt %)** | **Amount (g)** |
| **1** | Unsaturated Polyester resin | ENVIROGUARD M 98054 | 26,5 | 742 |
| **2** | Hardener | Trigonox C | 0,4 | 11,2 |
| **3** | Release Agent | Zinc Stearate | 1,3 | 36,4 |
| **4** | mineral Filler | Calcite (<50µm) | 57,1 | 1598,8 |
| **5** | Fiber | Flax | 14,7 | 411,6 |
| **Total** | **N.A** | **N.A** | **100** | **2800** |

### Example 2

| | | **(BMC Dough 2) - 46/54 wt.% Biochar-Calcite** | | |
|---|---|---|---|---|
| **Number** | **Ingredient** | **Name** | **Amount (wt %)** | **Amount (g)** |
| **1** | unsaturated Polyester resin | ENVIROGUARD M 98054 | 30,7 | 750 |
| **2** | Hardener | Trigonox C | 0,5 | 11,2 |
| **3** | Release Agent | Zinc Stearate | 1,500 | 36,4 |
| **4a** | filler originated from pyrolysis of carbonaceous material (mixture of hard and soft wood feedstock) | Biomass-based charcoal (50-250µm) | 25 | 600 |
| **4b** | mineral Filler | Calcite (<50µm) | 29 | 700 |
| **5** | Fiber | Flax | 13,30 | 324,4 |
| **Total** | **N.A** | **N.A** | **100** | **2422** |

### Example 3

| | | **(BMC Dough 3)** | | |
|---|---|---|---|---|
| **Number** | **Ingredient** | **Name** | **Amount (wt %)** | **Amount (g)** |
| **1** | unsaturated Polyester resin | ENVIROGUARD M 98054 | 40,98 | 800 |
| **2** | Hardener | Trigonox C | 0,58 | 11,4 |
| **3** | Release Agent | Zinc Stearate | 2,14 | 42 |
| **4** | filler originated from pyrolysis of carbonaceous material (mixture of hard and soft wood feedstock) | Biomass-based charcoal (50-250µm) | 40,98 | 800 |
| **5** | Fiber | Flax | 14,09 | 275 |
| **6** | Plasticizer (optional additive) | Glycerol | 1,23 | 24 |
| **Total** | **N.A** | **N.A** | **100** | **1952,4** |

### Example 4

| | | **(BMC Dough 4)** | | |
|---|---|---|---|---|
| **Number** | **Ingredient** | **Name** | **Amount (wt %)** | **Amount (g)** |
| **1** | unsaturated Polyester resin | ENVIROGUARD M 98054 | 42,61 | 800 |
| **2** | Hardener | Trigonox C | 0,61 | 11,4 |
| **3** | Release Agent | Zinc Stearate | 2,24 | 42 |
| **4** | filler originated from pyrolysis of carbonaceous material (grass-based feedstock) | Biomass-based charcoal (50-250µm) | 42,61 | 800 |
| **5** | Fiber | Flax | 10,65 | 200 |
| **6** | Plasticizer (optional additive) | Glycerol | 1,28 | 24 |
| **Total** | **N.A** | **N.A** | **100** | **1877,4** |

### Comparative Example 1

| **Number** | **Ingredient** | **Name** | **Amount (wt %)** | **Amount (g)** |
|---|---|---|---|---|
| **1** | Unsaturated Polyester resin | ENVIROGUARD M 98054 | 85 | 2380 |
| **2** | Hardener | Trigonox C | 1,3 | 35,9 |
| **3** | Release Agent | Zinc Stearate | 4,17 | 116,8 |
| **4** | filler originated from pyrolysis of carbonaceous material | Biomass-based charcoal (50-250µm) | 6,5 | 182 |
| **5** | Fiber | Flax | 3 | 84 |
| **Total** | **N.A** | **N.A** | **100** | **2800** |

### Comparative Example 2

| **Number** | **Ingredient** | **Name** | **Amount (wt %)** | **Amount (g)** |
|---|---|---|---|---|
| **1** | Unsaturated Polyester resin | ENVIROGUARD M 98054 | 15 | 420 |
| **2** | Hardener | Trigonox C | 0,2 | 6,34 |
| **3** | Release Agent | Zinc Stearate | 0,7360 | 20,6 |
| | | | | |
| **4** | filler originated from pyrolysis of carbonaceous material | Biomass-based charcoal (50-250µm) | 14,0 | 393 |
| **5** | Fiber | Flax | 70 | 1960 |
| **Total** | **N.A** | **N.A** | **100** | **2800** |

### Comparative Example 3

| **Number** | **Ingredient** | **Name** | **Amount (wt %)** | **Amount (g)** |
|---|---|---|---|---|
| **1** | Unsaturated Polyester resin | ENVIROGUARD M 98054 | 15 | 420 |
| **2** | Hardener | Trigonox C | 0,2 | 6,34 |
| **3** | Release Agent | Zinc Stearate | 0,74 | 20,6 |
| | | | | |
| **4** | filler originated from pyrolysis of carbonaceous material | Biomass-based charcoal (50-250µm) | 75,0 | 2100 |
| **5** | Fiber | Flax | 9 | 252 |
| **Total** | **N.A** | **N.A** | **100** | **2800** |

### Comparative Example 4

| **Number** | **Ingredient** | **Name** | **Amount (wt %)** | **Amount (g)** |
|---|---|---|---|---|
| **1** | Unsaturated Polyester resin | ENVIROGUARD M 98054 | 60 | 1680 |
| **2** | Hardener | Trigonox C | 0,9 | 25,4 |
| **3** | Release Agent | Zinc Stearate | 2,94 | 82,4 |
| **4** | filler originated from pyrolysis of carbonaceous material | Biomass-based charcoal (50-250µm) | 2,0 | 56 |
| **5** | Fiber | Flax | 34 | 952 |
| **Total** | **N.A** | **N.A** | **100** | **2800** |

From the above Comparative Examples 1-4 the inventors found that for Comparative Example 1 the amount of resin is too high and the amount of fiber is too low. For Comparative Example 2 there is too much fiber and not enough resin. For Comparative Example 3 there is too much filler and not enough resin. Comparative Example 4 there is not enough filler.

## Claims

1. Process for manufacturing a radically curable mixture by mixing and/or kneading a mixture comprising radically curable thermosetting resin, fibres, curing agent and filler to form a dough, wherein the content of radically curable thermosetting resin in the mixture is in the range 5-80 wt.%, the content of fibres in the mixture is in the range 9-50 wt.%, the content of filler in the mixture is in the range 10 - 80 wt.%, wherein the filler is chosen from one or more of the group of a) char originated from pyrolysis of grasses, wood, agricultural crops, manure, landfill and plastic waste sources and b) grinded pits from stone fruits, grinded pits from drupes and grinded shells from nuts, all wt.% are based on the total weight of the mixture, wherein the total sum of the components in the mixture is 100 %.

2. Process according to claim 1, wherein the resin is chosen from the group of unsaturated polyester resin, epoxy resin, a furan-based and a lignin-based resin, or a combination thereof.

3. Process according to any one of the preceding claims wherein the fibres are selected from the group of natural fibers, recycled cellulose fibers, glass fibers, carbon fibers and aramid fibers, or a combination thereof.

4. Process according to any one of the preceding claims wherein the mixture further comprises an additional filler chosen from the group of calcium carbonate and waste-stream based filler, wherein the sum of the content of filler and the additional filler in the mixture is in the range 40 - 70 wt.%.

5. Process according to any one of the preceding claims wherein the char is produced by pyrolysis of biomass, or a combination of pyrolysis and gasification, chosen from the group of agricultural crops, grasses, forestry, animal manure, and/or wherein the char is produced by pyrolysis, or a combination of pyrolysis and gasification, of industrial residues, urban waste, plastic waste and sewage sludge, or a combination thereof.

6. Process according to any one of the preceding claims wherein the curing agent is selected from the group consisting of peroxyesters and peroxycarbonates, preferably the curing agent is tert-butyl peroxybenzoate.

7. Process according to any one of the preceding claims wherein the content of radically curable thermosetting resin in the mixture is in the range above 5 wt.%, preferably above 20 wt.% and below 80 wt.%, preferably below 60 wt.% and more preferably below 50 wt.%, all wt.% are based on the total weight of the mixture, wherein the total sum of the components in the mixture is 100 %.

8. Process according to any one of the preceding claims wherein content of fibers in the mixture is in the range above 9 wt.% and below 50 wt.%, preferably below 40 wt.% and more preferably below 35 wt.%, all wt.% are based on the total weight of the mixture, wherein the total sum of the components in the mixture is 100 %.

9. Process according to any one of the preceding claims wherein content of fillers in the mixture is in the range above 10 wt.%, preferably above 30 wt.% and below 80 wt.%, preferably below 70 wt.% and more preferably below 60 wt.%, all wt.% are based on the total weight of the mixture, wherein the total sum of the components in the mixture is 100 %.

10. Compression moulding process for the preparation of fibre-reinforced articles comprising the step of filling a mould with the radically curable mixture obtained according to any one of claims 1 - 9 and applying a temperature in the range 60-180°C and a pressure of at least 10 bar to the moulded mixture.

11. Article obtained by a compression moulding process according to claim 10, said article comprising a radically cured thermosetting resin, fibres, curing agent and filler, wherein the content of radically curable thermosetting resin in the article is in the range 5-80 wt.%, the content of fibres in the article is in the range 9-50 wt.%, the content of filler in the article is in the range 10 - 80 wt.%, wherein the filler is chosen from one or more of the group of char originated from pyrolysis of grasses, agricultural crops, manure, landfill and plastic waste sources, grinded pits from stone fruits, grinded pits from drupes and grinded shells from nuts, all wt.% are based on the total weight of the article, wherein the total sum of the components in the article is 100 %.

12. Automotive part made of an article according to claim 11.

13. Constructive part made of an article according to claim 11.

14. Housing for electronics made of an article according to claim 11.

## Patentansprüche

1. Verfahren zur Herstellung eines radikalisch härtbaren Gemischs durch Mischen und/oder Kneten eines Gemischs aus radikalisch härtbarem Duroplastharz, Fasern, Härter und Füllstoff, um einen Teig zu bilden, wobei der Gehalt an radikalisch härtbarem Duroplastharz in dem Gemisch in dem Bereich 5-80 Gew.-% liegt, der Gehalt an Fasern in dem Gemisch in dem Bereich 9-50 Gew.-% liegt, der Gehalt an Füllstoff in dem Gemisch in dem Bereich 10-80 Gew.-% liegt, wobei der Füllstoff ausgewählt ist aus einer oder mehreren der Gruppen von a) Holzkohle aus Pyrolyse von Gräsern, Holz, Nutzpflanzen, Dung, Deponieabfall und Kunststoffabfall und b) gemahlenen Kernen von Steinobst, gemahlenen Kernen von Steinfrüchten und gemahlenen Nussschalen, wobei alle Gew.-% auf das Gesamtgewicht des Gemischs bezogen sind, wobei die Gesamtsumme der Komponenten in dem Gemisch 100 % beträgt.

2. Verfahren nach Anspruch 1, wobei das Harz ausgewählt ist aus der Gruppe von ungesättigtem Polyesterharz, Epoxyharz, einem Harz auf Furanbasis und einem Harz auf Ligninbasis oder einer Kombination davon.

3. Verfahren nach einem der vorstehenden Ansprüche, wobei die Fasern ausgewählt sind aus der Gruppe von Naturfasern, recycelten Cellulosefasern, Glasfasern, Kohlenstofffasern und Aramidfasern oder einer Kombination davon.

4. Verfahren nach einem der vorstehenden Ansprüche, wobei das Gemisch ferner einen zusätzlichen Füllstoff ausgewählt aus der Gruppe von Calciumcarbonat und Füllstoff auf Abfallstrom-Basis umfasst, wobei die Summe des Gehalts an Füllstoff und dem zusätzlichen Füllstoff in dem Gemisch in dem Bereich 40-70 Gew.-% liegt.

5. Verfahren nach einem der vorstehenden Ansprüche, wobei die Holzkohle durch Pyrolyse von Biomasse, oder eine Kombination von Pyrolyse und Vergasung, ausgewählt aus der Gruppe von Nutzpflanzen, Gräsern, Forstprodukten, Tierdung hergestellt wird und/oder wobei die Holzkohle durch Pyrolyse oder eine Kombination von Pyrolyse und Vergasung von industriellen Rückständen, kommunalem Abfall, Kunststoffabfall und Klärschlamm oder einer Kombination davon hergestellt wird.

6. Verfahren nach einem der vorstehenden Ansprüche, wobei das Härtungsmittel ausgewählt ist aus der Gruppe bestehend aus Peroxyestern und Peroxycarbonaten, wobei das Härtungsmittel vorzugsweise tert-Butylperoxybenzoat ist.

7. Verfahren nach einem der vorstehenden Ansprüche, wobei der Gehalt an radikalisch härtbarem Duroplastharz in dem Gemisch in dem Bereich über 5 Gew.-%, vorzugsweise über 20 Gew.-%, und unter 80 Gew.-%, vorzugsweise unter 60 Gew.-% und bevorzugter unter 50 Gew.-% liegt, wobei alle Gew.-% auf das Gesamtgewicht des Gemischs bezogen sind, wobei die Gesamtsumme der Komponenten in dem Gemisch 100 % beträgt.

8. Verfahren nach einem der vorstehenden Ansprüche, wobei der Gehalt an Fasern in dem Gemisch in dem Bereich über 9 Gew.-% und unter 50 Gew.-%, vorzugsweise unter 40 Gew.-% und bevorzugter unter 35 Gew.-% liegt, wobei alle Gew.-% auf das Gesamtgewicht des Gemischs bezogen sind, wobei die Gesamtsumme der Komponenten in dem Gemisch 100 % beträgt.

9. Verfahren nach einem der vorstehenden Ansprüche, wobei der Gehalt an Füllstoffen in dem Gemisch in dem Bereich über 10 Gew.-%, vorzugsweise über 30 Gew.-%, und unter 80 Gew.-%, vorzugsweise unter 70 Gew.-% und bevorzugter unter 60 Gew.-% liegt, wobei alle Gew.-% auf das Gesamtgewicht des Gemischs bezogen sind, wobei die Gesamtsumme der Komponenten in dem Gemisch 100 % beträgt.

10. Formpressverfahren zur Herstellung von faserverstärkten Gegenständen, umfassend den Schritt des Füllens eines Formwerkzeugs mit dem radikalisch härtbaren Gemisch, das nach einem der Ansprüche 1-9 erhalten ist, und des Anlegens einer Temperatur in dem Bereich 60-180 °C und eines Drucks von wenigstens 10 bar an das geformte Gemisch.

11. Gegenstand, erhalten durch ein Formpressverfahren nach Anspruch 10, wobei der Gegenstand ein radikalisch gehärtetes Duroplastharz, Fasern, Härtungsmittel und Füllstoff umfasst, wobei der Gehalt an radikalisch härtbarem Duroplastharz in dem Gegenstand in dem Bereich 5-80 Gew.-% liegt, der Gehalt an Fasern in dem Gegenstand in dem Bereich 9-50 Gew.-% liegt, der Gehalt an Füllstoff in dem Gegenstand in dem Bereich 10-80 Gew.-% liegt, wobei der Füllstoff ausgewählt ist aus einer oder mehreren der Gruppe von Holzkohle, die aus Pyrolyse von Gräsern, Nutzpflanzen, Dung, Deponieabfall und Kunststoffabfall, gemahlenen Kernen von Steinobst, gemahlenen Kernen von Steinfrüchten und gemahlenen Nusschalen stammt, wobei alle Gew.-% auf das Gesamtgewicht des Gegenstands bezogen sind, wobei die Gesamtsumme der Komponenten in dem Gegenstand 100 % beträgt.

12. Automobilteil, hergestellt aus einem Gegenstand nach Anspruch 11.

13. Konstruktionsteil, hergestellt aus einem Gegenstand nach Anspruch 11.

14. Gehäuse für Elektronik, hergestellt aus einem Gegenstand nach Anspruch 11.

## Revendications

1. Procédé de fabrication d'un mélange durcissable par voie radicalaire par le mélange et/ou le malaxage d'un mélange comprenant une résine thermodurcissable durcissable par voie radicalaire, des fibres, un agent de durcissement et une charge pour former une pâte, où la teneur en résine thermodurcissable durcissable par voie radicalaire dans le mélange se trouve dans la plage allant de 5 à 80% en poids, la teneur en fibres dans le mélange se trouve dans la plage allant de 9 à 50% en poids, la teneur en charge dans le mélange se trouve dans la plage allant de 10 à 80% en poids, où la charge est choisie parmi un ou plusieurs du groupe a) de charbon provenant de la pyrolyse d'herbes, de bois, de cultures agricoles, de fumier, de décharges et de déchets plastiques et b) de noyaux broyés de fruits à noyau, de noyaux broyés de drupes et de coquilles broyées de noix, tous les pourcentages en poids sont basés sur le poids total du mélange, où la somme totale des composants dans le mélange est de 100%.

2. Procédé selon la revendication 1, dans lequel la résine est choisie dans le groupe de résine de polyester insaturé, de résine époxy, de résine à base de furane et à base de lignine, ou d'une combinaison de celles-ci.

3. Procédé selon l'une quelconque des revendications précédentes, dans lequel les fibres sont choisies dans le groupe de fibres naturelles, de fibres de cellulose recyclées, de fibres de verre, de fibres de carbone et de fibres d'aramide, ou d'une combinaison de celles-ci.

4. Procédé selon l'une quelconque des revendications précédentes, dans lequel le mélange comprend en outre une charge supplémentaire choisie dans le groupe de carbonate de calcium et d'une charge à base de flux de déchets, où la somme des teneurs en charge et en charge supplémentaire dans le mélange se trouve dans la plage allant de 40 à 70% en poids.

5. Procédé selon l'une quelconque des revendications précédentes, dans lequel le charbon est produit par la pyrolyse de biomasse, ou une combinaison de pyrolyse et de gazéification, choisie dans le groupe de cultures agricoles, d'herbes, de produits forestiers, de fumier animal, et/ou dans lequel le charbon est produit par la pyrolyse, ou une combinaison de pyrolyse et de gazéification, de résidus industriels, de déchets urbains, de déchets plastiques et de boues d'épuration, ou d'une combinaison de ceux-ci.

6. Procédé selon l'une quelconque des revendications précédentes, dans lequel l'agent de durcissement est choisi dans le groupe constitué par les peroxyesters et les peroxycarbonates, de préférence l'agent de durcissement est le peroxybenzoate de tert-butyle.

7. Procédé selon l'une quelconque des revendications précédentes, dans lequel la teneur en résine thermodurcissable durcissable par voie radicalaire dans le mélange se trouve dans la plage supérieure à 5% en poids, de préférence supérieure à 20% en poids et inférieure à 80% en poids, de préférence inférieure à 60% en poids et, plus préférablement, inférieure à 50% en poids, tous les pourcentages en poids sont basés sur le poids total du mélange, où la somme totale des composants dans le mélange est de 100%.

8. Procédé selon l'une quelconque des revendications précédentes, dans lequel la teneur en fibres dans le mélange se trouve dans la plage supérieure à 9% en poids et inférieure à 50% en poids, de préférence inférieure à 40% en poids et, plus préférablement, inférieure à 35% en poids, tous les pourcentages en poids sont basés sur le poids total du mélange, où la somme totale des composants dans le mélange est de 100%.

9. Procédé selon l'une quelconque des revendications précédentes, dans lequel la teneur en charges dans le mélange se trouve dans la plage supérieure à 10% en poids, de préférence supérieure à 30% en poids et inférieure à 80% en poids, de préférence inférieure à 70% en poids et, plus préférablement, inférieure à 60% en poids, tous les pourcentages en poids sont basés sur le poids total du mélange, où la somme totale des composants dans le mélange est de 100%.

10. Procédé de moulage par compression pour la préparation d'articles renforcés de fibres comprenant l'étape de remplissage d'un moule avec le mélange durcissable par voie radicalaire obtenu selon l'une quelconque des revendications 1 à 9 et d'application d'une température dans la plage allant de 60 à 180°C et d'une pression d'au moins 10 bars au mélange moulé.

11. Article obtenu par un procédé de moulage par compression selon la revendication 10, ledit article comprenant une résine thermodurcissable à durcissement radicalaire, des fibres, un agent de durcissement et une charge, où la teneur en résine thermodurcissable durcissable par voie radicalaire dans l'article se trouve dans la plage allant de 5 à 80% en poids, la teneur en fibres dans l'article se trouve dans la plage allant de 9 à 50% en poids, la teneur en charge dans l'article se trouve dans la plage allant de 10 à 80% en poids, où la charge est choisie parmi un ou plusieurs du groupe de charbon provenant de la pyrolyse d'herbes, de cultures agricoles, de fumier, de décharges et de déchets plastiques, de noyaux broyés de fruits à noyau, de noyaux broyés de drupes et de coquilles broyées de noix, tous les pourcentages en poids sont basés sur le poids total de l'article, où la somme totale des composants dans l'article est de 100%.

12. Pièce automobile réalisée d'un article selon la revendication 11.

13. Pièce de construction réalisée d'un article selon la revendication 11.

14. Boîtier pour composants électroniques réalisé d'un article selon la revendication 11.
